# EUROPÄISCHE PATENTSCHRIFT

(11) **EP 1 387 104 B1**
(45) Veröffentlichungstag und Bekanntmachung des Hinweises auf die Patenterteilung: **31.10.2007**
(21) Anmeldenummer: 03016372.9
(22) Anmeldetag: 19.07.2003
(51) Int. Cl.: F16D 13/58

(54) **Reibungskupplung mit Auswuchtvorrichtung**
Clutch mechanism with balancing means
Moyens d'équilibrage dans un embrayage à friction

(30) Priorität: 03.08.2002 DE 10235709
(43) Veröffentlichungstag der Anmeldung: 04.02.2004
(73) Patentinhaber: ZF Sachs AG, 97424 Schweinfurt (DE)
(72) Erfinder: Lory, Mario, Dipl.-Ing., 97526 Sennfeld (DE); Link, Achim, Dipl.-Ing., 97422 Schweinfurt (DE)

(56) Entgegenhaltungen:
- DE-A- 4 342 361
- DE-B- 1 099 280
- FR-A- 2 812 918
- US-A- 4 425 991
- US-A- 4 520 912
- PATENT ABSTRACTS OF JAPAN vol. 008, no. 258 (M-340), 27. November 1984 (1984-11-27) & JP 59 131033 A (ETSUCHI KEE ESU:KK), 27. Juli 1984 (1984-07-27)

## Beschreibung

Die Erfindung bezieht sich auf eine Reibungskupplung, insbesondere für Kraftfahrzeuge, umfassend ein am Schwungrad einer Brennkraftmaschine befestigtes Kupplungsgehäuse, eine mit dem Kupplungsgehäuse drehfest, aber axial verlagerbare Anpressplatte, eine zwischen Schwungrad und Anpressplatte drehfest auf einer Getriebewelle angeordnete Kupplungsscheibe, eine Tellerfeder zur Beaufschlagung der Reibbeläge der Kupplungsscheibe über die Anpressplatte.

Es sind Membranfederkupplungen bekannt (DE 43 42 361 A1) mit einem Schwungrad und einem hiermit verbundenen Kupplungsgehäuse, einem mit dem Kupplungsgehäuse über Blattfedern verbundenen Anpressplatte und einer Membranfeder. In Bereiche der Membranfederzungen sind hier Fliehkraftgewichte bewegbar aufgenommen, welche bei Erreichen einer vorbestimmten Fliehkraft an einem Anschlag zur Anlage kommen. Nachteilig ist hierbei, dass es sich um eine Vielzahl von Bauteilen handelt, wobei im radial inneren Bereich ein entsprechender Raumbedarf vorgehalten werden muss.

Dokument DE 4342361 offenbart die Merkmale des Oberbegriffs des Anspruchs 1.

Darüber hinaus sind Reibungskupplungen bekannt (US 2 885 047; DE 24 50 267 C2), bei denen die Membranfederzungen für eine Schwerpunktverlagerung axial ausgestellt sind. Hierdurch ergibt sich ein zusätzliches Moment, welches bei Fliehkraftbeeinflussung die Anpresskraft im eingekuppelten Zustand erhöht, und wobei während des Auskuppelvorganges eine Beeinflussung der Ausrückkraft vorliegt. Derartige Lösungen lassen sich in engen Bauräumen nicht ausführen, da die angrenzenden Bauteile, wie z. B. Ausrücker und Kupplungsscheibe, raumbegrenzend sind und eine merkliche Kraftverstärkung das Gewicht der Kupplung unterwünschterweise erhöht.

Es ist daher Aufgabe der Erfindung, eine Reibungskupplung zu schaffen, die eine zusätzliche Anpresskraftverstärkung auch in engen Bauräumen ermöglicht und die Ausrückkraft unterstützt.

Die Aufgabe der Erfindung wird durch die Merkmale des Anspruchs 1 gelöst.

Erfindungsgemäß wird die Aufgabe dadurch gelöst, dass im äußeren Randbereich der Tellerfeder mindestens ein Masseelement angeordnet ist.

Durch diese Anordnung ist es bei Beibehaltung des engen axialen Bauraumes möglich, eine Erhöhung der Anpresskraft bei Erhöhung der Motordrehzahl zu erzielen, und das Anbringen zusätzlicher Gewichte auf radial weit von der Kupplungsdrehachse entfernten Radien erhöht die Schwungmasse der Kupplung, insbesondere wenn das Masseelement auf einem Radius angeordnet ist, der im Überdeckungsbereich der Anpressplatte, der Reibbeläge oder radial weiter außen hierzu ausgebildet ist. Da das Schwungrad, das Kupplungsgehäuse, die Anpressplatte und die Tellerfeder mit dem Masseelement ein gemeinsames Rotationsträgheitsmoment darstellen, kann das dem Masseelement entsprechende Rotationsträgheitsmoment am Gehäuse, der Anpressplatte oder dem Schwungrad entsprechend eingespart werden und lässt sich die Reibungskupplung entsprechend ohne Gewichtszunahme ausführen.

Insbesondere auch dann, wenn das Masseelement radial am äußersten Randbereich der Tellerfeder ausgebildet wird, kann die Kupplung zusammen mit dem Schwungrad bei Beibehaltung des Rotationsträgheitsmomentes mit geringerem Gewicht als ohne Masseelement gestaltet werden.

Die Ausbildung eines Masseelementes radial außerhalb des Federbereiches der Tellerfeder ergibt höhere, radial gerichtete Fliehkräfte, bzw. erlaubt die geforderte, radial gerichtete Fliehkraft bei geringerem Bauteilgewicht zu erzielen. Die Wirkung dieser Masseelemente/des Masseelementes bei Drehzahl wird verstärkt, wenn der Schwerpunkt des Masseelementes in axialer Richtung einen möglichst großen axialen Abstand von dem Widerlager der Tellerfeder am Kupplungsgehäuse hat. Hierbei muss der Drehsinn des durch Masseelement und den axialen Abstand dieses Masseelement-Schwerpunktes vom Widerlager am Kupplungsgehäuse infolge Drehzahl entstehende Kippmoment derart gerichtet sein, dass die Tellerfeder sich verstärkt abstützt an der Auflage an der Anpressplatte. Liegt im eingekuppelten Zustand der Schwerpunkt des Masseelementes vom Widerlager der Tellerfeder am Kupplungsgehäuse axial in Richtung der Reibbeläge, wirkt in den Fällen, in denen der Auflagerbereich der Tellerfeder an der Anpressplatte radial innerhalb des Widerlagers der Tellerfeder am Kupplungsgehäuse sich befindet, und der Schwerpunkt des Masseelementes radial am oder außerhalb des Widerlagers der Tellerfeder ist, ein mit der Drehzahl steigendes Kippmoment auf die Tellerfeder, welches anpresskraftverstärkend wirkt. Eine solche Reibungskupplung wird als gezogene Bauart bezeichnet. Für Ausführungsformen, bei denen im eingekuppelten Zustand der Schwerpunkt des Masseelementes vom Widerlager der Tellerfeder am Kupplungsgehäuse axial in Richtung des Kupplungsgehäuses, also in Richtung weg von den Reibbelägen, wirkt in den Fällen, in denen der Auflagebereich der Tellerfeder an der Anpressplatte radial außerhalb dem Widerlager der Tellerfeder am Kupplungsgehäuse sich befindet, ein mit der Drehzahl der Reibungskupplung steigendes Kippmoment auf die Tellerfeder, welches anpresskraftverstärkend wirkt. Eine solche Anordnung der Tellerfeder in der Reibungskupplung wird als gedrückte Kupplung bezeichnet.

In weiterer Ausgestaltung kann hierbei die Anbindung des Masseelementes radial außen im Randbereich oder außerhalb des Randbereiches der Tellerfeder erfolgen und sich dann zumindest teilweise nach radial innen überdeckend mit der Tellerfeder erstrecken. Hierbei erfolgt kein Eignriff in den hochbelasteten Bereich der Tellerfeder, welcher mit hohen Spannungen beaufschlagt wird, und das Masseelement sitzt auf einem radial weit außen liegenden Radius, ohne über den Außendurchmesser des Kupplungsgehäuses hinaus zu gehen.

Eine weitere Ausführungsform sieht vor, dass das Masseelement über den gesamten Umfang verlaufend angeordnet ist. Neben einer vornehmlich kostengünstigen Fertigung und geringer Bauteilvielfalt ist hierbei die Winkellage des Masseelementes bezüglich dem Gehäuse, der Tellerfeder und der weiteren Bauteile unerheblich, wodurch der Zusammenbau einer Reibungskupplung sich vereinfacht. In alternativer Ausgestaltung sind mehrere Masseelemente über den Umfang verteilt angeordnet. Insbesondere dann, wenn der axiale Abstand vom Auflagerpunkt am Kupplungsgehäuse des Schwerpunktes eines Masseelementes weit verlagert wird, wird somit ein größeres Moment und am Auflagebereich der Tellerfeder an der Anpressplatte eine höhere Kraftverstärkung bei Drehzahl erzielt.

Die oder das Masseelement kann ebenso einteilig mit der Tellerfeder ausgebildet sein. Sind die Masseelementes am radial außenliegenden Randbereich der Tellerfeder als laschenartige Fortbildungen mit ausgebildet, die in axialer Richtung umgebogen sind, können diese Laschen hierbei in Durchbrüche oder Öffnungen im Kupplungsgehäuse in axialer Richtung eignreifen. Weiter lässt sich das Gewicht eines Masseelementes erhöhen, wenn die Laschen durch umgebogene, umgefaltete Randbereiche mehrschichtig ausgebildet sind. Auch können die Endbereiche der Laschen abgewickelt in radialer Richtung sein. Es ist aber auch möglich, alternativ hierzu oder aber zusätzlich die Masseelemente fest aber lösbar mit der Tellerfeder zu verbinden oder Zusatzmassen anzubringen. Diese können durch Vernietung, Verschraubung oder Schweißen als weiteres Masseelement angebracht werden. Die Masseelemente können auch zum Ausgleich von Unwuchten herangezogen werden. Hierbei können Zusatzgewichte, ähnlich beim Auswuchten von PKW-Reifen, mittels Halteklammern an der Tellerfeder oder einem Masseelement angebracht werden. Insbesondere wenn sich axial erstreckende Abschnitte als Masseelemente an der Tellerfeder ausbilden, können die Zusatzgewichte durch Verschieben in axialer Richtung eine unterschiedliche Unwuchtverteilung innerhalb der Reibungskupplung in axialer Richtung ausgeglichen.

Bei einer axialen Erstreckung des Masseelementes in Richtung auf das Kupplungsgehäuse wird vorteilhaft vorgesehen, dass das Kupplungsgehäuse entsprechende Ausnehmungen oder Ausbuchtungen hierfür aufweist. Diese können vorteilhaft mittels eines Stanz- oder Prägevorganges im Kupplungsgehäuse eingebracht werden.

Die Erfindung ist nach beiliegenden Zeichnungen näher beschrieben. Es zeigen:
- Fig. 1: einen Halbschnitt einer erfindungsgemäßen Reibungskupplung;
- Fig. 2a: erfindungsgemäße Ausgestaltung einer Tellerfeder;
- Fig. 2b: eine weitere erfindungsgemäße Ausgestaltung einer Tellerfeder;
- Fig. 3: Draufsicht auf ein Kupplungsgehäuse;
- Fig. 4: perspektivische Darstellung einer Tellerfeder/Membranfeder;
- Fig. 5: Halbschnitt einer erfindungsgemäßen Ausgestaltung einer Reibungskupplung;
- Fig. 6: Halbschnitt einer weiteren erfindungsgemäßen Ausgestaltung einer Reibungskupplung;
- Fig. 7: Halbschnitt einer weiteren erfindungsgemäßen Ausgestaltung einer Reibungskupplung;
- Fig. 8a: Halbschnitt einer gezogenen Reibungskupplung mit Gehäuseausbuchtung für Masseelement;
- Fig. 8b: Halbschnitt der Reibungskupplung gemäß 8a um 15° verdreht.

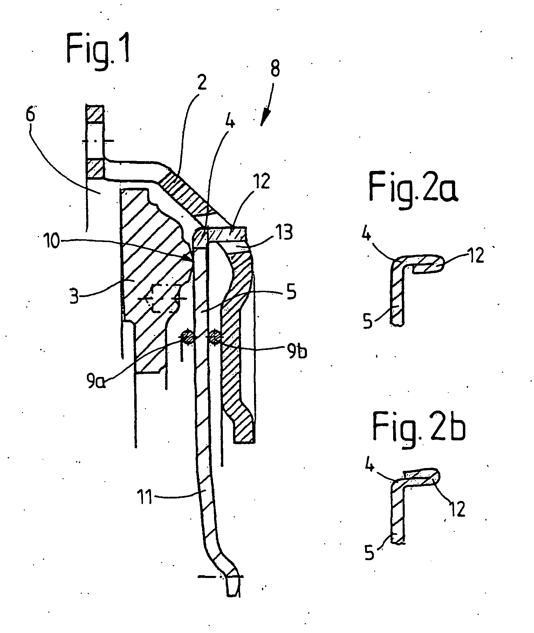

Bei der in Fig. 1 im Schnitt dargestellten Reibungskupplung 8 sind die Reibbeläge 6 einer Kupplungsscheibe angedeutet in Anlage an einer Anpressplatte 3, welche über hier nicht gezeigte Blattfedern drehfest, aber axial beweglich mit dem Kupplungsgehäuse 2 vernietet ist. Die Anpressplatte 3 wird mittels einer Tellerfeder 5 in Richtung auf ein Schwungrad und den Reibbelägen 6 zum Übertragen eines Drehmomentes kraftbeaufschlagt. Die Tellerfeder 5 ist mittels einem als ersten Widerlager 9a, welcher hier die Ausführung eines umlaufenden Drahtringes besitzt, und einem zweiten Widerlager 9b, welcher hier ebenso als umlaufender Drahtring ausgebildet ist, am Kupplungsgehäuse 2 um diese Lagerstelle schwenkbar gelagert. Im eingekuppelten Zustand stützt sich hierbei die Tellerfeder 5 am zweiten Widerlager 9b und den umlaufend an der Anpressplatte 3 ausgebildeten Auflagerpunkt 10 ab. Radial innerhalb der Widerlager 9a und 9b sind an der Tellerfeder 5 als Membranfederzungen 11 ausgebildete Betätigungshebel angebracht, mittels welcher die Tellerfeder 5 während des Ein- und Auskuppelvorganges um die Widerlager 9a, 9b verschwenkt. Hierzu greift am radial innen liegenden Endbereich der Membranfederzungen 11 ein Ausrücklagerelement eines Betätigungsmittels an. Im radial außen liegenden Endbereich der Tellerfeder 5 weist dieser ein ringartig umlaufendes, mit mehreren in Umfangsrichtung aufeinander folgend angeordneten Fortsätzen 12 versehenes Masseelement 4 auf. Dieses Masseelement 4 setzt sich zusammen einem auf den Außenrand der Tellerfeder 5 aufgepressten Ring, welcher abgewinkelte Fortsätze 12 gleichmäßig über den Umfang verteilt innehat. Diese Fortsätze 12 durchsetzen in Axialrichtung entsprechende in das Kupplungsgehäuse 2 eingebrachte Ausbrüche 13, welche ihrerseits derart gestaltet sind, dass das Masseelement 4 mit seinen Axialfortsätzen 12 bei einer Schwenkbewegung der Tellerfeder 5 während eines Ein- und Auskuppelvorganges diesbezüglich ausreichend Freiraum aufweist, um eine Kollision zu vermeiden. Alternativ zum hier dargestellten ausgeschrumpften Presssitz kann die Verbindung zwischen dem Masseelement 4 und der Tellerfeder 5 auch mittels eines Laserschweißverfahrens vorgenommen werden. Hierbei ist es im Allgemeinen ausreichend, wenn über den Umfang verteilt mehrere einzelne, unterbrochene Schweißnähte begrenzter Länge die Verbindung der Bauteile sicherstellen. Vorteilhaft sind diese dann im Bereich der Fortsätze 12 angebracht. Die Figuren 2a und 2b zeigen noch weitere Ausgestaltungsmöglichkeiten der Fortsätze 12. Durch Umbiegen dieser Laschen nach radial außen bzw. radial innen und Zusammenpressen der einander zuweisenden Oberflächen kann das Gewicht des Masseelementes 4 erhöht und der Abstand des Schwerpunktes vom Auflagerpunkt 10 erweitert werden.

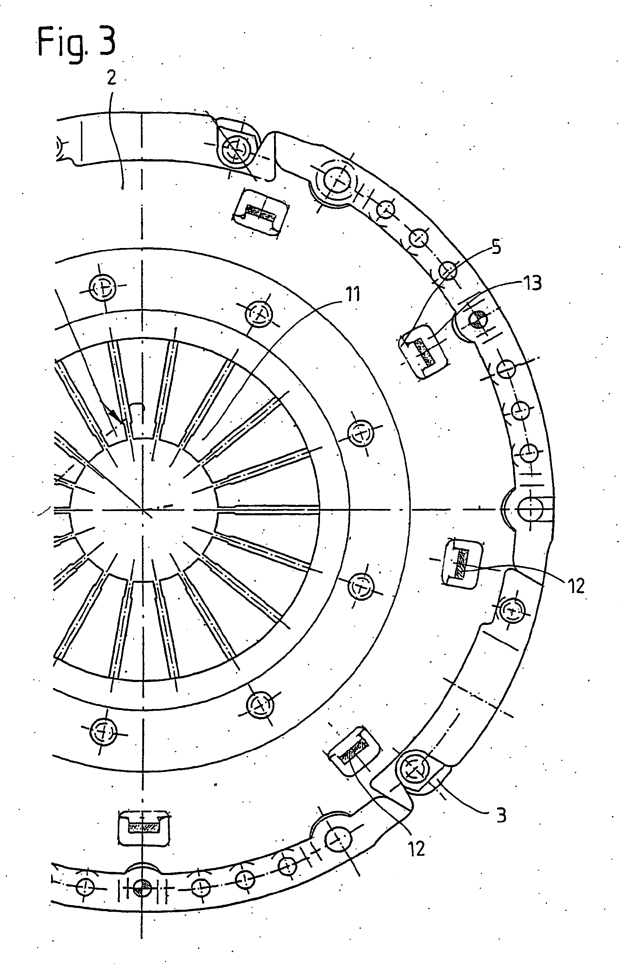

Die Fig. 3 zeigt eine Draufsicht der in Fig. 1 dargestellten Reibungskupplung 8 mit den radial innen liegenden angeordneten Membranfederzungen 11, welche als Betätigungshebel der Tellerfeder 5 dienen. Des Weiteren sind die Ausbrüche 13, durch welche sich die Fortsätze 12 des Masseelementes 4 erstrecken, erkennbar.

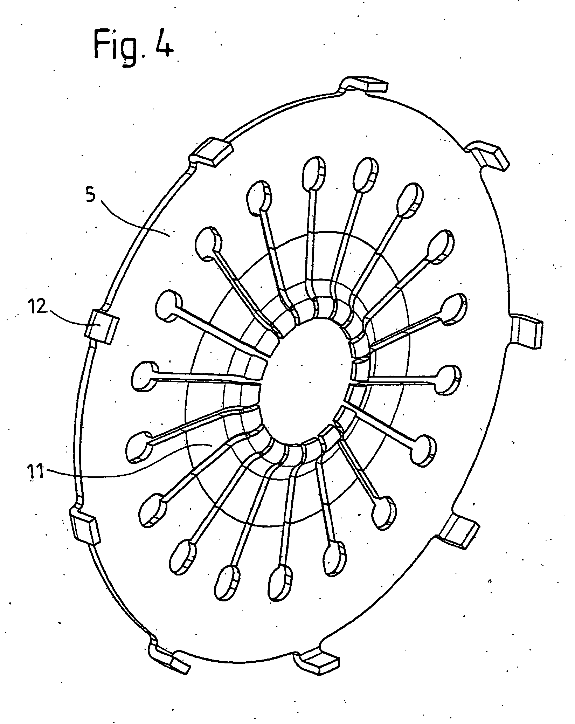

In Fig. 4 ist eine Membranfeder dargestellt, welche zur Verwendung in einer erfindungsgemäßen Reibungskupplung nach Fig. 1 vorgesehen ist. In Abweichung der Ausführungsform nach Fig. 1 ist hierbei anschließend an dem radial außen liegenden Endbereich der Tellerfeder 5 die erfindungsgemäße Ausgestaltung mit den Fortsätzen 12 einteilig gefertigt. Nach radial innen geht die Tellerfeder 5 in die Membranfederzungen 11 über, mittels welcher die Tellerfeder 5 während eines Kupplungsvorganges betätigt wird. Üblicherweise werden bei einer solchen einteiligen Ausgestaltung die Fortsätze 12 mittels eines Stanzvorganges und nachfolgendem Umformvorgang vor der Härtebehandlung der Tellerfeder aufgeführt. Die Anzahl und Verteilung der Fortsätze 12 kann hierbei beliebig variiert werden.

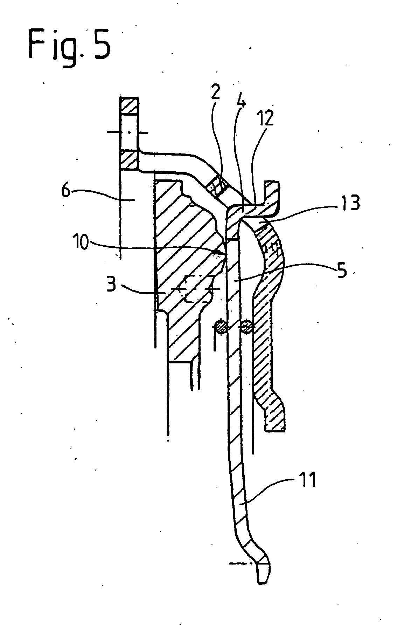

Die in der Fig. 5 dargestellte Reibungskupplung 8 unterscheidet sich von der in Fig. 1 gezeigten Ausführungsform durch eine abweichende geometrische Ausgestaltung des Masseelementes 4. Hier setzt sich der Fortsatz 12 in Axialrichtung durch den Ausbruch 13 hindurch und weist daran anschließend eine sich vornehmlich radial erstreckende Fortsetzung auf. Hierdurch kann der Masseschwerpunkt des Masseelementes 4 in Axialrichtung weiter von der Anlage der Tellerfeder 5 am Auflagerpunkt 10 entfernt liegen. Der Ausbruch 13 ist hier idealerweise derart ausgeformt, dass das Masseelement 4 sowohl bei der Schwenkbewegung der Tellerfeder 5 während eines Kuppelvorganges als auch infolge einer Abnutzung der Reibbeläge 6 verursachten Schrägstellung der Tellerfeder 5 mit einer einhergehenden Axialverlagerung der Anpressplatte 3 in Richtung auf das Schwungrad die Freigängigkeit zwischen Masseelement 4 und dem Ausbruch 13 gewährleistet ist. Der Bereich des Masseelementes 4, welcher sich außerhalb des Eingriffsbereichs mit dem Ausbruch 13 befindet, kann hierbei in Umfangsrichtung eine größere Ausdehnung als jener Bereich des Masseelementes 4, welcher durch den Ausbruch 13 im zusammengebauten Zustand in Umfangsrichtung überdeckt wird, aufweisen. So weist z. B. bei der in Fig. 3 gezeigten Ausführungsform der Fortsatz 12 des Masseelementes 4 einen größeren Abstand in Umfangsrichtung von der Wandung des Ausbruchs 13 auf als dies rein während des Zusammenbaus notwendig wäre.

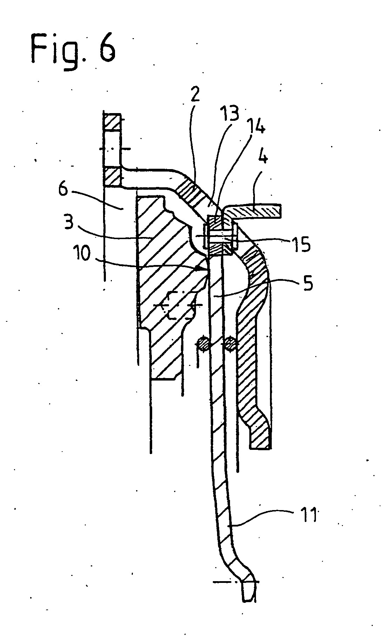

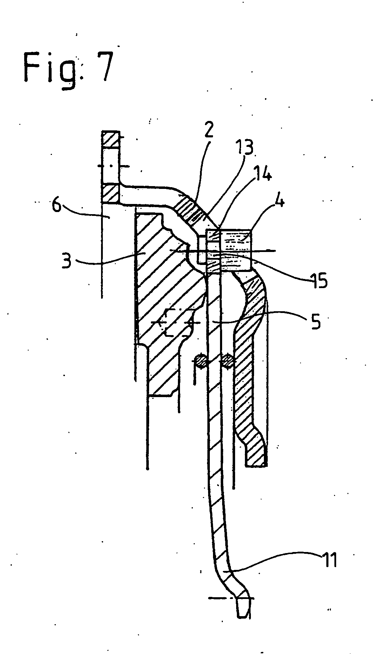

Bei den in den Fig. 6 und 7 gezeigten Ausführungsformen ist die Membranfeder der Reibungskupplung 8 derart ausgestaltet, dass in Umfangsrichtung am radial äußeren Randbereich der Tellerfeder 5 Befestigungsbereiche 14 ausgebildet sind. Diese Befestigungsbereiche 14 weisen in Umfangsrichtung eine Ausdehnung ähnlich den Fortsätzen 12 entsprechend Fig. 4 auf, und sind bei den in Fig. 6 und 7 gezeigten Beispielen vornehmlich radial ausgerichtet. Es ist jedoch auch möglich, diese geneigt zur Ebene der Tellerfeder 5 auszugestalten. An diese Befestigungsbereiche 14 sind mittels Befestigungsmittel 15 jeweils separate, einzelne Masseelemente 4 angebracht. Diese Masseelemente 4 können eine Ausgestaltung entsprechend den Fig. 1 und 5 aufweisen, durch die getrennte Herstellung der Tellerfeder 5 und der Masseelemente 4 ergeben sich für geringe Stückzahlen Kostenvorteile. Bei der Ausgestaltung gemäß Fig. 6 ist das Masseelement 4 an den Befestigungsbereich 14 angenietet, es ist jedoch auch möglich, diese zu verschrauben oder zu kleben. Das in Fig. 7 gezeigte Masseelement 4 weist ein als Niet ausgebildetes Befestigungsmittel 15 einteilig mit dem Masseelement 4 auf. Alternativ kann das Masseelement 4 an den Befestigungsbereich 14 auch über einen Gießvorgang angebracht und selbst hierbei hergestellt werden. Hierzu eignen sich insbesondere Legierungen mit entsprechend geringem Schmelzpunkt und einem hohen, spezifischen Gewicht (Blei oder andere Schwermetalle), wobei deren Schmelzpunkt eine anschließende Wärmebehandlung der Tellerfeder 5 nicht beschränkt.

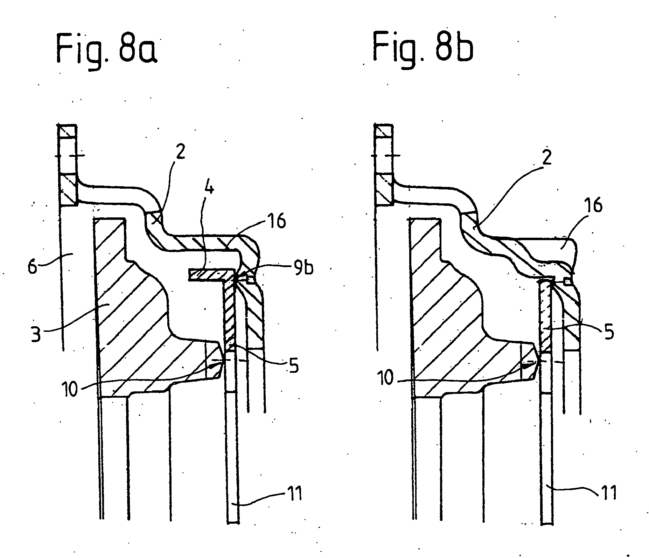

Die in den Fig. 8a und 8b gezeigte Reibungskupplung unterscheidet sich von den vorab gezeigten Ausführungsbeispielen dadurch, dass hier eine gezogene Reibungskupplung dargestellt ist. Hierbei befindet sich der Auflagerpunkt 10 der Anpressplatte 3 radial innerhalb des Auflagerpunktes der Tellerfeder 5 am Kupplungsgehäuse 2. Die in Fig. 1 erläuterte Befestigung der Tellerfeder 5 am Gehäuse 2 über ein erstes Widerlager 9a und einem zweiten Widerlager 9b ist hier nicht erforderlich, da sowohl im ausgekuppelten als auch im eingekuppelten Zustand die Tellerfeder 5 sich am dem zweiten Widerlager 9b entsprechenden Auflagerpunkt am Kupplungsgehäuse 2 abstützt. Die Betätigung der Tellerfeder 5 erfolgt analog über daran angebrachte Membranfederzungen 11. Bei einem Auskuppelvorgang werden die Membranfederzungen 11 nicht in Richtung auf die Reibbeläge 6 sondern axial von diesen weg bewegt. Da gezogene Reibungskupplungen insbesondere dann zum Einsatz kommen, wenn besonders starke Tellerfedern 5 verwendet werden, müssen die Kupplungsgehäuse 2 besonders steif gestaltet sein. Bei dem in Fig. 8a gezeigten Schnittverlauf ist die Tellerfeder 5 in einem Bereich geschnitten, indem sich am radial äußeren Randbereich, ähnlich der Ausführungsform nach Fig. 4, ein Masseelement vornehmlich in Axialrichtung weisend anschließt. Da hier jedoch bei einer gezogenen Reibungskupplung der Auflagerpunkt 10 an der Anpressplatte 3 radial innerhalb des Auflagebereichs der Tellerfeder 5 am Gehäuse 2 liegt, muss das durch das Masseelement 4 erzeugte Moment derart gerichtet sein, dass, ausgehend von der Betrachtung des dem zweiten Widerlager 9b entsprechend dem Auflagerpunktes am Gehäuse als Drehpunkt dieses sich in Uhrzeigerrichtung auf den Auflagerpunkt 10 hin bewegt. Entsprechend wird die durch das Masseelement 4 erzeugte Verstärkung der Anpresskraft am Auflagerpunkt 10 beeinflusst durch den axialen Abstand des Schwerpunktes des Masseelementes 4 vom Auflagerpunkt der Tellerfeder 5 am Kupplungsgehäuse 2. Die Kraftverstärkung wird umso größer, je weiter dieser Schwerpunkt in Richtung auf die Reibbeläge 6 sich diesen annähert. Prinzipiell ist es möglich, dass ein Masseelement 4 bei der in Fig. 8a gezeigten Ausführungsform über den gesamten Umfang verlaufend angeordnet ist. Vorteilhaft ist dann das umlaufende Masseelement 4 derart ausgebildet, dass die Anbindung an die Tellerfeder 5 nicht über den Umfang durchgehend erfolgt. Vielmehr ist es ausreichend, wenn drei oder mehr Verbindungspunkte zwischen dem umlaufenden Masseelement 4 und der Tellerfeder 5 getrennt voneinander angebracht sind. Das Kupplungsgehäuse 2 weist weiterhin zum Zusammenwirken mit den mehreren, in Umfangsrichtung angeordneten Masseelementen 4 Ausbuchtungen 16 auf, die z. B. als vergrößerte Sicken eingeprägt sein können. Diese Ausbuchtungen 16 sind entsprechend den Masseelementen 4 in Umfangsrichtung im Kupplungsgehäuse 2 ausgebildet. Der Schnittverlauf entsprechend Fig. 8b ist in soweit von der Winkellage verschoben, als dass die Tellerfeder 5 in einem Bereich geschnitten wird, welcher zwischen zwei aufeinander folgend angeordneten Masseelementen 4 liegt Um die Steifheit des Kupplungsgehäuses 2 zu gewährleisten, weist dieses in den Abschnitten, in denen die Tellerfeder 5 nicht mit einem Masseelement 4 verbunden ist, die entsprechende Ausbuchtung 16 nicht auf. Insbesondere kann hier die in radialer Richtung der Tellerfeder 5 zugewandte Wandung des Kupplungsgehäuses 2 zur Zentrierung der Tellerfeder 5 ausgebildet sein. Die in den vorgenannten Figuren gezeigten Alternativen Ausgestaltungsmöglichkeiten zur Ausbildung eines Masseelementes bzw. der Masseelemente 4 lassen sich vorteilhaft auch bei gezogenen Reibungskupplungen entsprechend den Fig. 8a und 8b verwirklichen. Auch ist es möglich, anstatt den Ausbuchtungen 16 alternativ Ausbrüche 13 im Kupplungsgehäuse 2 einzubringen, welche mit den jeweiligen Masseelementen 4 zusammenwirken.

### Bezugszeichenliste

- 1.: Schwungrad
- 2.: Kupplungsgehäuse
- 3.: Anpressplatte
- 4.: Masseelement
- 5.: Tellerfeder
- 6.: Reibbeläge
- 7.: Ausnehmungen
- 8.: Reibungskupplung
- 9a.: erstes Widerlager
- 9b.: zweites Widerlager
- 10.: Auflagerpunkt
- 1 1.: Membranfederzungen
- 1 2.: Fortsatz
- 1 3.: Ausbruch
- 14.: Befestigungsbereiche
- 1 5.: Befestigungsmittel
- 1 6.: Ausbuchtungen

## Patentansprüche

1. Reibungskupplung, insbesondere für Kraftfahrzeuge, umfassend
• ein an einem Schwungrad einer Brennkraftmaschine oder der Sekundärseite eines Zweimassenschwungrades befestigtes Kupplungsgehäuse,
• eine mit dem Kupplungsgehäuse drehfest, aber axial verlagerbare Anpressplatte,
• eine zwischen Schwungrad und Anpressplatte drehfest auf einer Getriebewelle angeordnete Kupplungsscheibe,
• eine Tellerfeder zur Beaufschlagung der Reibbeläge der Kupplungsscheibe über die Anpressplatte.
**dadurch gekennzeichnet,**
**dass** im äußeren Randbereich der Tellerfeder mindestens ein sich in axialer Richtung erstreckendes Masseelement angeordnet und außerhalb des spannungsbelasteten Abschnitts der Tellerfeder angebracht ist wobei das Kupplungsgehäuse entsprechende Ausnehmungen oder Ausbuchtungen hierfür aufweist.

2. Reibungskupplung nach Anspruch 1,
**dadurch gekennzeichnet,**
**dass** ein Masseelement über den gesamten Umfang verlaufend angeordnet ist.

3. Reibungskupplung nach Anspruch 1,
**dadurch gekennzeichnet,**
**dass** mehrere Masseelemente über den Umfang verteilt angeordnet sind.

4. Reibungskupplung nach einem der vorhergehenden Ansprüche,
**dadurch gekennzeichnet,**
**dass** das oder die Masseelemente einteilig mit der Tellerfeder ausgebildet sind.

5. Reibungskupplung nach einem der vorhergehenden Ansprüche,
**dadurch gekennzeichnet,**
**dass** das oder die Masseelemente fest aber lösbar mit der Tellerfeder verbunden ist.

6. Reibungskupplung nach einem der vorhergehenden Ansprüche,
**dadurch gekennzeichnet,**
**dass** das oder die Masseelemente als Ausgleichsgewichte dienen.

## Claims

1. Friction clutch, in particular for motor vehicles, comprising
• a clutch housing which is fastened to a flywheel of an internal combustion engine or the secondary side of a two-mass flywheel,
• a pressure plate which is fixed in terms of rotation to the clutch housing but can be displaced axially,
• a clutch plate which is arranged fixedly in terms of rotation on a transmission shaft between the flywheel and the pressure plate,
• a disc spring for loading the friction linings of the clutch plate via the pressure plate,
**characterized in that** at least one mass element which extends in the axial direction is arranged in the outer edge region of the disc spring and is attached outside the stress-loaded section of the disc spring, the clutch housing having corresponding recesses or bulges for this purpose.

2. Friction clutch according to Claim 1, **characterized in that** a mass element is arranged so as to extend over the entire circumference.

3. Friction clutch according to Claim 1, **characterized in that** a plurality of mass elements are distributed over the circumference.

4. Friction clutch according to one of the preceding claims, **characterized in that** the mass element or mass elements is/are configured in one piece with the disc spring.

5. Friction clutch according to one of the preceding claims, **characterized in that** the mass element or mass elements is/are connected firmly but releasably to the disc spring.

6. Friction clutch according to one of the preceding claims, **characterized in that** the mass element or mass elements serves/serve as compensating weights.

## Revendications

1. Embrayage à friction, en particulier pour des véhicules automobiles, comprenant
- un carter d'embrayage fixé sur un volant d'inertie d'un moteur à combustion interne ou sur le côté secondaire d'un volant d'inertie à deux masses,
- un plateau de pression lié en rotation au carter d'embrayage, mais axialement mobile,
- un disque d'embrayage disposé entre le volant d'inertie et le plateau de pression en étant lié en rotation sur un arbre de transmission,
- un disque de ressort pour solliciter les garnitures de friction du disque d'embrayage par l'intermédiaire du plateau de pression,
**caractérisé en ce qu'**au moins un élément formant masse, s'étendant en direction axiale, est disposé dans la région du bord extérieur du disque de ressort et est installé en dehors de la partie du disque de ressort qui est sollicitée en tension, sachant que le carter d'embrayage présente des échancrures ou évidements correspondants à cet effet.

2. Embrayage à friction selon la revendication 1, **caractérisé en ce qu'**un élément formant masse est disposé en s'étendant sur tout le pourtour.

3. Embrayage à friction selon la revendication 1, **caractérisé en ce que** plusieurs éléments formant masse sont disposés en étant répartis sur le pourtour.

4. Embrayage à friction selon l'une quelconque des revendications précédentes, **caractérisé en ce que** le ou les éléments formant masse sont réalisés d'un seul tenant avec le disque de ressort.

5. Embrayage à friction selon l'une quelconque des revendications précédentes, **caractérisé en ce que** le ou les éléments formant masse sont reliés au disque de ressort fixement mais de manière amovible.

6. Embrayage à friction selon l'une quelconque des revendications précédentes, **caractérisé en ce que** le ou les éléments formant masse servent de poids d'équilibrage.
